# FASCICULE DE BREVET EUROPEEN

(11) **EP 3 508 701 B1**
(45) Date de publication et mention de la délivrance du brevet: **03.03.2021**
(21) Numéro de dépôt: 18213732.3
(22) Date de dépôt: 18.12.2018
(51) Int. Cl.: F01D 25/12, F02K 3/06, F01D 9/06, F02K 3/062

(54) **AUBE DIRECTRICE DE SORTIE POUR TURBOMACHINE D' AERONEF, COMPRENANT UN PASSAGE DE REFROIDISSEMENT DE LUBRIFIANT EQUIPE DE PLOTS PERTURBATEURS DE FLUX**
AUSTRITTSLEITSCHAUFEL FÜR TURBOTRIEBWERK EINES LUFTFAHRZEUGS, DIE EINEN KÜHLDURCHGANG FÜR DAS SCHMIERMITTEL UMFASST, DER MIT STÖRSTUFEN DES FLUSSES AUSGESTATTET IST
OUTLET GUIDE VANE FOR AIRCRAFT TURBINE ENGINE, COMPRISING A LUBRICANT COOLING PASSAGE EQUIPPED WITH FLOW INTERRUPTION PADS

(30) Priorité: 19.12.2017 FR 1762405
(43) Date de publication de la demande: 10.07.2019
(73) Titulaire: SAFRAN AIRCRAFT ENGINES, 75015 Paris (FR)
(72) Inventeur: BOUTALEB, Mohammed-Lamine, 77550 MOISSY-CRAMAYEL (FR); CHASSAGNE, Amélie Argie Antoinette, 77550 MOISSY-CRAMAYEL (FR); MARQUIES, Dimitri Daniel Gariel, 77550 MOISSY-CRAMAYEL (FR)
(74) Mandataire: Brevalex

(56) Documents cités:
- EP-A2- 1 630 358
- FR-A1- 2 989 110
- US-A- 4 914 904
- US-B2- 8 616 834

## Description

### DOMAINE TECHNIQUE

La présente invention se rapporte au domaine des turbomachines d'aéronef à double flux, et en particulier à la conception des aubes directrices agencées dans tout ou partie d'un flux d'air d'une soufflante de la turbomachine.

Il s'agit de préférence d'aubes directrices de sortie, également dénommées OGV (de l'anglais « Outlet Guide Vane »), prévues pour redresser le flux d'air en sortie de la soufflante. Alternativement ou simultanément, des aubes directrices pourraient le cas échéant être placées à l'entrée de la soufflante. Les aubes directrices sont classiquement agencées dans la veine secondaire de la turbomachine.

L'invention concerne de préférence un turboréacteur d'aéronef équipé de telles aubes directrices de sortie. Elle concerne également un procédé de fabrication d'une telle aube.

### ETAT DE LA TECHNIQUE ANTERIEURE

Sur certaines turbomachines à double flux, il est connu d'implanter des aubes directrices de sortie en aval de la soufflante pour redresser le flux qui s'échappe de celle-ci, et aussi éventuellement pour remplir une fonction structurale. Cette dernière fonction vise en effet à permettre le passage des efforts du centre de la turbomachine, vers une virole extérieure située dans le prolongement du carter de soufflante. Dans ce cas de figure, une attache moteur est classiquement agencée sur ou à proximité de cette virole extérieure, pour assurer la fixation entre la turbomachine et un mât d'accrochage de l'aéronef.

Récemment, il a également été proposé d'affecter une fonction additionnelle aux aubes directrices de sortie. Il s'agit d'une fonction d'échangeur thermique entre l'air extérieur traversant la couronne d'aubes directrices de sortie, et du lubrifiant circulant à l'intérieur de ces aubes. Cette fonction d'échangeur thermique est par exemple connue du document US 8 616 834, ou encore du document FR 3 046 811.

Le lubrifiant destiné à être refroidi par les aubes directrices de sortie peut provenir de différentes zones de la turbomachine. Il peut en effet s'agir d'un lubrifiant circulant à travers des enceintes de lubrification des paliers de roulement supportant les arbres moteur et/ou le moyeu de soufflante, ou encore d'un lubrifiant dédié à la lubrification des éléments de transmission mécanique de la boîte d'accessoires (de l'anglais AGB « Accessory Geared Box »). Enfin, il peut aussi servir à la lubrification d'un réducteur d'entraînement de la soufflante, lorsqu'un tel réducteur est prévu sur la turbomachine afin de diminuer la vitesse de rotation de sa soufflante.

Les besoins croissants en lubrifiant nécessitent d'adapter en conséquence la capacité de dissipation de chaleur, associée aux échangeurs destinés au refroidissement du lubrifiant. Le fait d'attribuer un rôle d'échangeur thermique aux aubes directrices de sortie, comme dans les solutions des deux documents cités ci-dessus, permet en particulier de diminuer, voire de supprimer les échangeurs conventionnels du type ACOC (de l'anglais «Air Cooled Oil Cooler »). Ces échangeurs ACOC étant généralement agencés dans la veine secondaire, leur diminution / suppression permet de limiter les perturbations du flux secondaire, et d'augmenter ainsi le rendement global de la turbomachine.

Au sein du passage intérieur de refroidissement de lubrifiant, il est possible d'implanter des plots destinés à perturber le flux de lubrifiant et à augmenter la surface mouillée, dans le but d'assurer un meilleur échange thermique. Ainsi, plus la performance thermique recherchée est élevée, plus la fabrication s'avère longue et/ou coûteuse, surtout lorsque l'aube présente une longueur élevée.

Par conséquent, il subsiste un besoin d'aboutir à une conception procurant une fonction thermique performante, tout facilitant la fabrication de cette aube à échangeur intégré.

### EXPOSÉ DE L'INVENTION

Pour répondre au moins partiellement à ce besoin, l'invention a tout d'abord pour objet une aube directrice destinée à être agencée dans tout ou partie d'un flux d'air d'une soufflante de turbomachine d'aéronef à double flux, l'aube directrice comprenant un pied, une tête, ainsi qu'une partie aérodynamique de redressement de flux agencée entre le pied et la tête de l'aube, l'aube comprenant un corps d'extrados définissant au moins une partie d'une surface d'extrados de la partie aérodynamique, ainsi qu'un corps d'intrados définissant au moins une partie d'une surface d'intrados de la partie aérodynamique, celle-ci comportant au moins un passage intérieur de refroidissement de lubrifiant équipé de plots perturbateurs de flux et délimité au moins en partie par les corps d'intrados et d'extrados fixés l'un sur l'autre.

Selon l'invention, une première série de plots est réalisée d'un seul tenant avec le corps d'extrados, les plots de la première série définissant entre eux un premier espace inter-plots, une seconde série de plots est réalisée d'un seul tenant avec le corps d'intrados, les plots de la seconde série définissant entre eux un second espace inter-plots pénétré par les plots de la première série tandis que le premier espace inter-plots est pénétré par les plots de la seconde série, et enfin, l'extrémité des plots de la première série se situe à distance du corps d'intrados de même que l'extrémité des plots de la seconde série se situe à distance du corps d'extrados.

Ainsi, l'invention prévoit astucieusement une interpénétration des deux séries de plots agencées respectivement sur les corps d'extrados et d'intrados, ce qui conduit à augmenter les échanges thermiques sans pour autant nécessiter une fabrication complexe. En effet, en raison de l'interpénétration de plots spécifique à l'invention, les perturbations générées par ces plots conduisent le lubrifiant à se déplacer également dans le sens de l'épaisseur de l'aube, ce qui augmente la surface mouillée ainsi que le phénomène de convection. Par ailleurs, les plots peuvent être réalisés de façon conventionnelle sur chacun des deux corps de l'aube, par exemple par simple usinage, ou encore par moulage.

En d'autres termes, l'invention proposée contraste avec les réalisations antérieures en ce qu'elle prévoit des plots réalisés sur les deux corps qui forment l'aube, et qui s'interpénètrent afin de favoriser encore davantage les perturbations du flux de lubrifiant circulant dans le passage intérieur.

L'invention prévoit de préférence au moins l'une quelconque des caractéristiques optionnelles suivantes, prises isolément ou en combinaison.

Chacune des première et seconde séries de plots se présente sous forme de matrice définissant des lignes et des colonnes de plots. Cette disposition particulière facilite la fabrication des plots, en particulier lorsqu'ils sont réalisés par usinage.

Les plots des première et seconde séries de plots sont alors préférentiellement agencés en quinconce. Alternativement, ils peuvent par exemple être agencés de manière à définir une alternance de colonnes réalisées exclusivement avec des plots de la première série, et de colonnes réalisées exclusivement avec des plots de la seconde série.

Selon un autre mode de réalisation, au sein de chacune des première et seconde séries de plots, les plots sont agencés en quinconce. Il est alors préférentiellement fait en sorte que les plots des première et seconde séries de plots soient agencés de manière à définir ensemble une matrice formant des lignes et des colonnes de plots, chacune des lignes et colonnes de la matrice étant réalisée par l'alternance de plots de la première série et de plots de la seconde série.

Quel que soit le mode de réalisation envisagé, chaque plot présente de préférence une section de forme générale circulaire, oblongue, carrée ou rectangulaire.

L'invention a également pour objet une turbomachine d'aéronef, de préférence un turboréacteur, comprenant une pluralité d'aubes directrices comme celle décrite ci-dessus, agencées en aval ou en amont d'une soufflante de la turbomachine.

Enfin, l'invention a pour objet un procédé de fabrication d'une telle aube directrice, comprenant une étape de réalisation des plots par usinage des corps d'extrados et d'intrados.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un turboréacteur selon l'invention ;
- la figure 2 représente une vue agrandie, plus détaillée, d'une aube directrice de sortie du turboréacteur montré sur la figure précédente, selon un premier mode de réalisation préféré de l'invention ;
- la figure 2a est une vue en coupe prise le long de la ligne IIa-IIa de la figure 2 ;
- la figure 2b est une vue partielle et agrandie de celle de la figure 2a ;
- la figure 3 est une vue agrandie en perspective d'une partie d'un corps d'extrados de l'aube directrice de sortie montrée sur les figures 2 à 2b ;
- la figure 4 est une vue agrandie en perspective d'un corps d'intrados de l'aube directrice de sortie montrée sur les figures 2 à 2b ;
- la figure 5 représente une vue partielle en coupe selon la ligne V-V de la figure 2a, traversant orthogonalement les plots perturbateurs de flux ;
- la figure 5a est une vue similaire à celle de la figure 5, avec les plots agencés selon une alternative de réalisation ; et
- la figure 6 est une vue similaire à celle de la figure 5, avec les plots agencés selon un second mode de réalisation préféré de l'invention.

### EXPOSÉ DÉTAILLÉ DE MODES DE RÉALISATION PRÉFÉRÉS

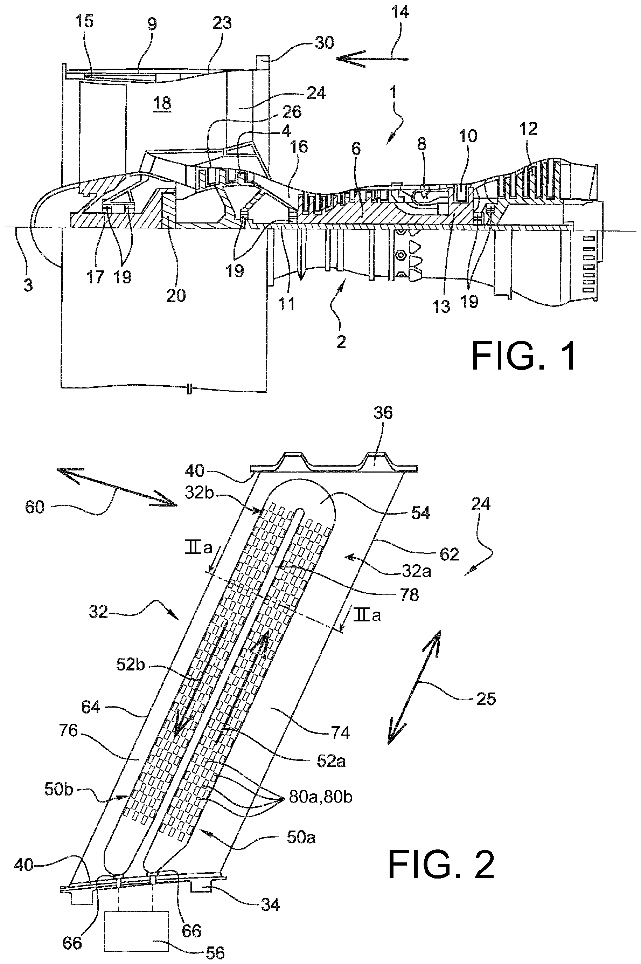

En référence à la figure 1, il est représenté un turboréacteur 1 à double flux et à double corps, présentant un taux de dilution élevé. Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci. En revanche, les termes « amont » et « aval » sont considérés selon la direction d'écoulement principale des gaz au sein du turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 unique qui est ici agencée directement à l'arrière d'un cône d'entrée d'air du moteur. La soufflante 15 est rotative selon l'axe 3, et entourée d'un carter de soufflante 9. Sur la figure 1, elle n'est pas entraînée directement par l'arbre basse pression 11, mais seulement entraînée indirectement par cet arbre via un réducteur 20, ce qui lui permet de tourner avec une vitesse plus lente. Néanmoins, une solution à entraînement direct de la soufflante 15, par l'arbre basse pression 11, entre dans le cadre de l'invention.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire, le flux de la soufflante étant donc divisé. Comme cela est connu de l'homme du métier, la veine secondaire 18 est délimitée radialement vers l'extérieur en partie par une virole extérieure 23, préférentiellement métallique, prolongeant vers l'arrière le carter de soufflante 9.

Bien que cela n'ait pas été représenté, le turboréacteur 1 est équipé d'un ensemble d'équipements, par exemple du type pompe à carburant, pompe hydraulique, alternateur, démarreur, actionneur stator à calage variable (VSV), actionneur de vanne de décharge, ou encore générateur électrique de puissance. Il s'agit notamment d'un équipement pour la lubrification du réducteur 20. Ces équipements sont entraînés par une boîte d'accessoires ou AGB (non représentée), qui est également lubrifiée.

En aval de la soufflante 15, dans la veine secondaire 18, il est prévu une couronne d'aubes directrices qui sont ici des aubes directrices de sortie 24 (ou OGV, de l'anglais « Outlet Guide Vane »). Ces aubes statoriques 24 relient la virole extérieure 23 à un carter 26 entourant le compresseur basse pression 4. Elles sont espacées circonférentiellement les unes des autres, et permettent de redresser le flux secondaire après son passage à travers la soufflante 15. De plus, ces aubes 24 peuvent également remplir une fonction structurale, comme c'est le cas dans des exemples de réalisation qui sont présentement décrits. Elles assurent le transfert des efforts provenant du réducteur et des paliers de roulement 19 des arbres moteur et du moyeu de soufflante, vers la virole extérieure 23. Ensuite, ces efforts peuvent transiter par une attache moteur 30 fixée sur la virole 23 et reliant le turboréacteur à un mât d'accrochage (non représenté) de l'aéronef.

Enfin, les aubes directrices de sortie 24 assurent, dans les exemples de réalisation qui sont présentement décrits, une troisième fonction d'échangeur thermique entre le flux d'air secondaire traversant la couronne d'aubes, et du lubrifiant circulant à l'intérieur de ces aubes 24. Le lubrifiant destiné à être refroidi par les aubes directrices de sorties 24 est celui servant à la lubrification des paliers de roulement 19, et/ou des équipements du turboréacteur, et/ou du boîtier d'accessoires, et/ou du réducteur 20. Ces aubes 24 font ainsi partie du/des circuits fluidiques dans lesquels le lubrifiant est mis en circulation pour successivement lubrifier le/les éléments associés, puis pour être refroidi.

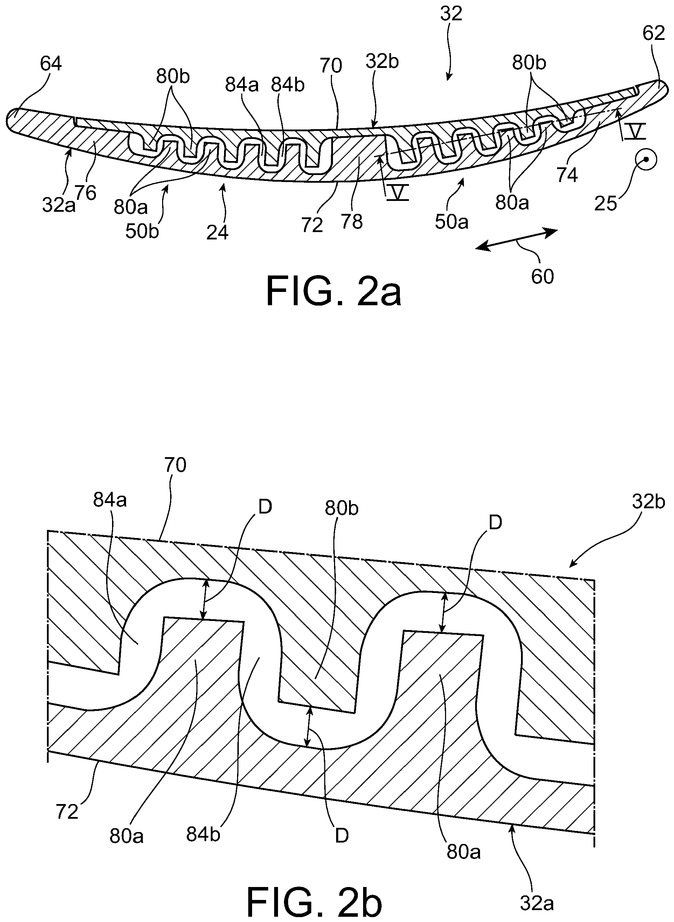

En référence à présent aux figures 2 à 5, il va être décrit l'une des aubes directrices de sortie 24, selon un premier mode de réalisation préféré de l'invention. Il est noté que l'invention qui va être décrite peut s'appliquer à toutes les aubes 24 de la couronne statorique centrée sur l'axe 3, ou bien seulement à certaines de ces aubes.

L'aube 24 peut être d'orientation strictement radiale comme sur la figure 1, ou bien être légèrement inclinée axialement comme cela est montré sur la figure 2. Dans tous les cas, elle est préférentiellement droite en vue de côté telle que montrée sur la figure 2, en s'étendant selon une direction d'envergure 25.

L'aube directrice de sortie 24 comporte une partie aérodynamique 32 qui correspond à sa partie centrale, c'est-à-dire celle exposée au flux secondaire. De part et d'autre de cette partie aérodynamique 32 servant à redresser le flux sortant de la soufflante, l'aube 24 comporte respectivement un pied 34 et une tête 36.

Le pied 34 sert à la fixation de l'aube 24 sur le carter du compresseur basse pression, tandis que la tête sert à la fixation de cette même aube sur la virole extérieure prolongeant le carter de soufflante. De plus, l'aube 24 comprend au niveau de son pied et de sa tête, des plateformes 40 servant à reconstituer la veine secondaire entre les aubes 24, dans la direction circonférentielle. Alternativement, les plateformes 40 peuvent être rapportées entre les aubes 24.

La partie aérodynamique 32 de l'aube est préférentiellement fabriquée en deux partie distinctes, rapportées ensuite fixement l'une sur l'autre. Il s'agit tout d'abord d'un corps d'extrados 32a, qui comprend non seulement une grande partie de la partie aérodynamique 32, mais également le pied 34, la tête 36 et les plateformes 40. Ce corps 32a est réalisé d'un seul tenant, par exemple par fonderie puis usinage. L'autre partie est formée par un corps d'intrados 32b, sous la forme d'un capot fermant le corps 32a fixé à ce dernier par une technique classique comme le soudage, le brasage ou encore le collage. Le corps d'intrados 32b peut également être réalisé d'un seul tenant à l'aide de techniques conventionnelles, par exemple aussi par fonderie puis usinage.

Dans ce premier mode de réalisation préféré de l'invention, la partie aérodynamique 32 est équipée de deux passages intérieurs 50a, 50b sensiblement parallèles l'un à l'autre, et parallèles à la direction d'envergure 25. Plus précisément, il s'agit d'un premier passage intérieur 50a de refroidissement de lubrifiant, qui s'étend selon une première direction principale 52a d'écoulement du lubrifiant. Cette direction 52a est sensiblement parallèle à la direction d'envergure 25, et présente un sens allant du pied 34 vers la tête 36. De manière analogue, il est prévu un second passage intérieur 50b de refroidissement de lubrifiant, qui s'étend selon une seconde direction principale 52b d'écoulement du lubrifiant au sein de ce passage. Cette direction 52b est aussi sensiblement parallèle à la direction d'envergure 25, et présente un sens inverse allant de la tête 36 au pied 34. Le premier passage 50a est donc prévu pour être traversé radialement vers l'extérieur par le lubrifiant, tandis que le second passage 50b est prévu pour être traversé radialement vers l'intérieur. Pour assurer le passage de l'un à l'autre, à proximité de la tête 36, les extrémités radiales externes des deux passages 50a, 50b sont reliées fluidiquement par un coude 54 à 180°, correspondant à un creux pratiqué dans la partie aérodynamique 32. Alternativement, les passages 50a, 50b ne se raccordent pas au sein de la partie aérodynamique 32 de l'aube 24, mais s'étendent chacun séparément sur toute la longueur de la partie aérodynamique 32. Pour se raccorder fluidiquement l'un à l'autre en dehors de l'aube 24, il est par exemple prévu un coude de raccordement agencé radialement vers l'extérieur par rapport à la tête d'aube 36, par exemple en appui sur cette tête.

Les extrémités radiales internes des deux passages 50a, 50b sont quant à elles reliées au circuit de lubrifiant 56, schématisé par l'élément 56 sur la figure 2. Ce circuit 56 comprend notamment une pompe (non représentée), permettant d'appliquer au lubrifiant le sens de circulation désiré au sein des passages 50a, 50b, à savoir l'introduction du lubrifiant par l'extrémité radiale interne du premier passage 50a, et l'extraction du lubrifiant par l'extrémité radiale interne du second passage 50b. Des raccords 66 assurent la communication fluidique entre les extrémités radiales internes des passages 50a, 50b et le circuit 56, ces raccords 66 traversant le pied 34.

Les deux passages 50a, 50b ainsi que le coude 54 présentent ensemble une forme générale de U, avec le premier passage 50a et le second passage 50b décalés l'un de l'autre selon une direction transversale 60 de l'aube sensiblement orthogonale à la direction d'envergure 25. Pour optimiser au mieux les échanges thermiques, le premier passage 50a se situe du côté d'un bord de fuite 62 de l'aube 24, tandis que le second passage 50b se situe du côté d'un bord d'attaque 64. Cependant, une situation inverse peut être retenue, sans sortir du cadre de l'invention. Il est également noté que l'invention pourrait prévoir une partie aérodynamique 32 qu'avec un unique passage intérieur de refroidissement, sans sortir du cadre de l'invention. Dans ce cas de figure, certaines aubes seraient traversées par le lubrifiant de l'intérieur vers l'extérieur, tandis que d'autres aubes seraient traversées dans le sens inverse.

Le corps d'extrados 32a comporte, au niveau de la partie aérodynamique 32, une surface d'extrados 72, une zone pleine 74 située à proximité du bord de fuite 62, une zone pleine 76 située à proximité du bord d'attaque 64, ainsi qu'une zone pleine centrale 78. Ces trois zones 74, 76, 78 sont en contact avec le corps d'intrados 32b, et les deux zones 74, 76 présentent des renfoncements pour le support et la fixation de ce corps d'intrados 32b. La zone centrale 78 sert également de renfort structural et s'étend du pied 34 jusqu'au coude 54, tandis que les zones pleines 74, 76 s'étendent sur sensiblement toute la longueur de la partie aérodynamique 32, selon la direction d'envergure 25.

Le premier passage 50a est formé entre les zones pleines 74, 78, tandis que le second passage 50b est formé entre les zones pleines 76, 78. Les passages 50a, 50b s'étendent transversalement selon la direction 60 en présentant une épaisseur variable entre les deux corps 32a, 32b. L'épaisseur maximale de ces passages peut être de l'ordre de quelques millimètres. Alternativement, les passages 50a, 50b pourraient avoir une épaisseur constante, sans sortir du cadre de l'invention.

Le corps d'intrados 32b définit quant à lui surface d'intrados 70, ou une grande partie de celle-ci.

Les deux passages intérieurs 50a, 50b de refroidissement de lubrifiant présentent la particularité d'intégrer des plots perturbateurs de flux. Ces plots sont prévus sur le corps d'extrados 32a ainsi que sur le corps d'intrados 32b, et s'interpénètrent au sein des passages 50a, 50b, comme cela sera détaillé ci-après.

La disposition et la forme des plots sont sensiblement identiques ou analogues dans les deux passages 50a, 50b. Ils sont également prévus dans des mêmes densités, bien que cela puisse en être autrement, sans sortir du cadre de l'invention. Par conséquent, seuls les plots du premier passage intérieur 50a vont à présent être décrits, mais il est à comprendre que cette description est également applicable par analogie aux plots du second passage intérieur 50b. Par ailleurs, il est noté que le coude 54 définit un espace intérieur qui est préférentiellement exempt de plots.

Dans le premier passage 50a, il est tout d'abord prévu une première série de plots 80a réalisée d'un seul tenant avec le corps d'extrados 32a. Pour la formation de ces plots 80a, il est préférentiellement procédé à l'usinage de la surface du corps 32a opposée à la surface d'extrados 72. Les plots 80a sont ainsi réalisés en saillie en direction du corps d'intrados 32b, en étant sensiblement orthogonaux à la direction 52a. La hauteur de plot en direction du corps 32b est par exemple de l'ordre de un ou plusieurs millimètres. Dans au moins une zone du passage 50a, et de préférence dans l'intégralité de ce dernier, les plots 80a sont prévus dans une densité par exemple d'environ 3 plots/cm². Plus généralement, la densité est comprise par exemple entre environ 1 et 5 plots/cm² en moyenne.

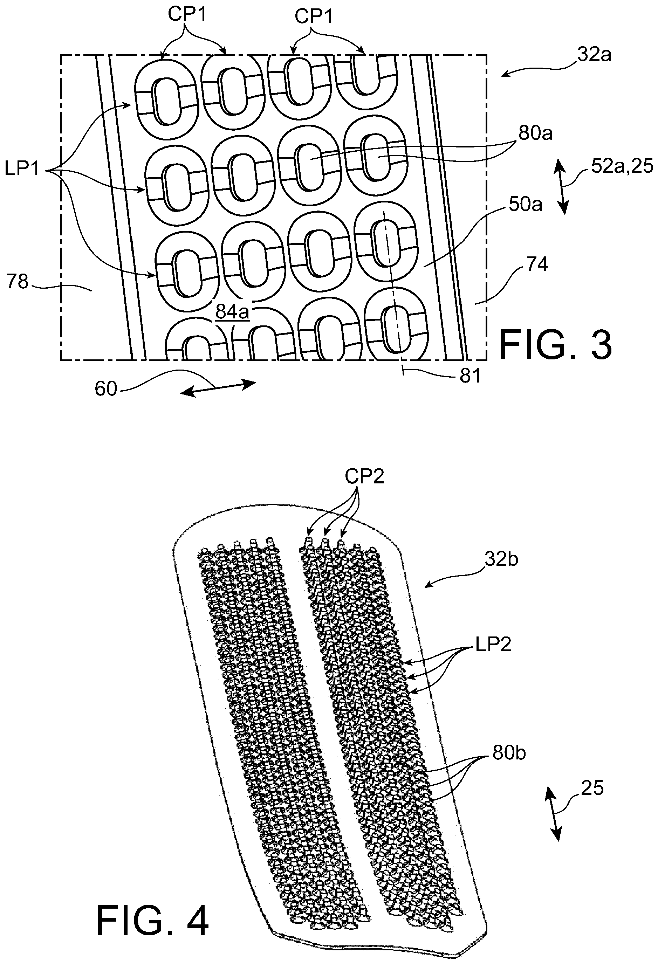

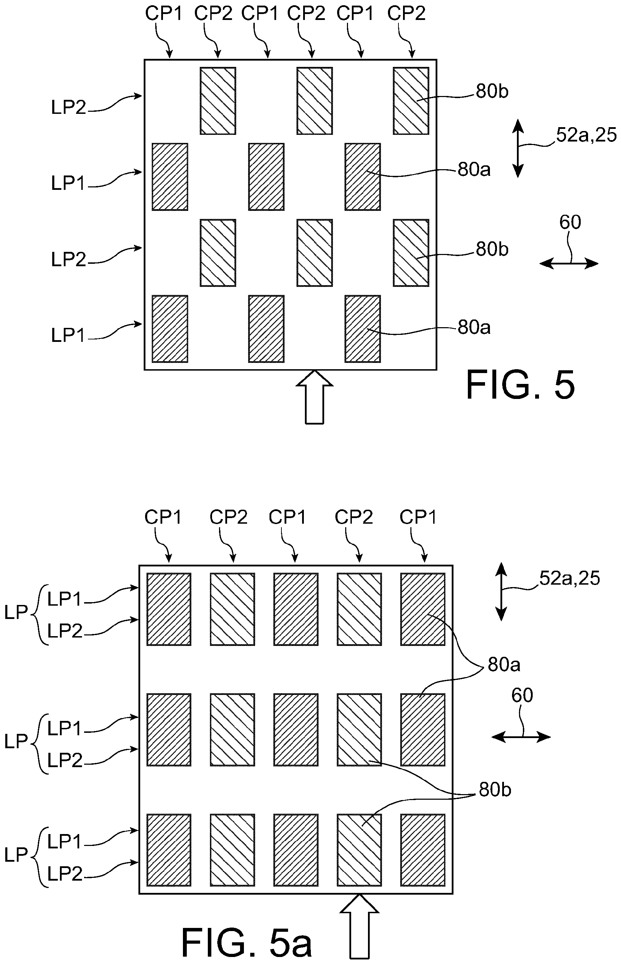

Les plots 80a peuvent adopter une section de forme générale rectangulaire comme représentée sur la figure 5, ou bien de forme oblongue comme montrée sur la figure 3. Cette forme oblongue est préférée, en particulier lorsque son grand axe 81 est agencé parallèlement à la direction 52a. Néanmoins, d'autres formes peuvent être adoptées pour la section qui est préférentiellement sensiblement identique sur toute la hauteur de plot, comme par exemple une forme générale carrée.

Dans ce premier mode de réalisation préféré, la première série de plots 80a se présente sous forme de matrice définissant des premières colonnes de plots CP1, ainsi que des premières lignes de plots LP1. Les colonnes de plots CP1 se succèdent selon la direction 60, tandis que les lignes de plots LP1 se succèdent selon la direction 52a. Les lignes et les colonnes sont préférentiellement sensiblement droites avec des espacements réguliers inhérents à la forme de matrice, ce qui permet un usinage simple des plots 80a, en effectuant des passes parallèles et perpendiculaires entre elles.

Dans le passage 50a, ce sont ainsi plusieurs dizaines de lignes LP1 de plots 80a qui se succèdent selon la première direction 52a. Par ailleurs, il peut être prévu un nombre de colonnes CP1 compris entre 2 et 8, par exemple 4.

Enfin, il est noté que les plots 80a de la première série définissent entre eux un premier espace inter-plot 84a.

Pour ce qui concerne le corps d'intrados 32b, il est procédé à une réalisation similaire. En effet, dans le premier passage 50a, il est également prévu une seconde série de plots 80b réalisée d'un seul tenant avec le corps d'intrados 32b. Pour la formation de ces plots 80b, il est préférentiellement procédé à l'usinage de la surface du corps 32b opposée à la surface d'intrados 70. Les plots 80b sont ainsi réalisés en saillie en direction du corps d'extrados 32a, en étant sensiblement orthogonaux à la direction 52a. La hauteur de plot, la forme et la densité sont préférentiellement identiques ou similaires à celles de la première série de plots 80a.

La seconde série de plots 80b se présente aussi sous forme de matrice définissant des secondes colonnes de plots CP2, ainsi que des secondes lignes de plots LP2. Les colonnes de plots CP2 se succèdent selon la direction 60, tandis que les lignes de plots LP2 se succèdent selon la direction 52a. Le nombre, la forme, la composition ainsi que les espacements des lignes et des colonnes sont préférentiellement identiques à ceux de la première série de plots 80a.

Enfin, il est noté que les plots 80b de la seconde série définissent entre eux un second espace inter-plot 84b, référencé sur la figure 2a.

L'une des autres particularités de l'invention réside dans le fait que les plots 80a, 80b s'interpénètrent, c'est-à-dire que les plots 80a de la première série pénètrent dans le second espace inter-plot 84b, de même que les plots 80b de la seconde série pénètrent dans le premier espace inter-plot 84a. La coopération entre les deux corps 32a, 32b est retenue de sorte que l'ensemble des plots 80a, 80b, formés par les première et seconde séries, soient agencés en quinconce pour une meilleure perturbation du flux de lubrifiant et un échange thermique accru. Cette disposition en quinconce est montrée sur la figure 5. Elle est facilement obtenue par l'alternance de premières et secondes colonnes CP1, CP2, ainsi que par l'alternance de premières et secondes lignes LP1, LP2. Pour ce faire, il suffit de décaler la matrice de plots 80b (présentant les hachures les moins serrées) de la matrice de plots 80a (présentant les hachures les plus serrées), selon une valeur d'un demi-pas selon la direction 52a, ainsi que d'une valeur d'un demi-pas selon la direction 60. A cet égard, il est noté qu'au sein des matrices, le pas entre les colonnes peut différer du pas entre les lignes, ou bien ce pas peut être identique.

Comme cela a été représenté sur les figures 2a et 2b, les plots 80a, 80b ne contactent pas le corps opposé 32a, 32b. En d'autres termes, l'extrémité des plots 80a de la première série se situe à distance de la surface du corps 32b à partir de laquelle font saillie les plots 80b de la seconde série, de même que l'extrémité de ces plots 80b se situe à distance de la surface du corps 32a à partir de laquelle font saillie les plots 80a de la première série. Ces distances « D » d'écartement entre les plots et leur corps opposé ont été référencées sur la figure 2b. Ces distances sont préférentiellement identiques, par exemple de 0,5 à 3 mm. Par conséquent, l'interpénétration des plots qui en découle permet de favoriser encore davantage les échanges thermiques, puisque le lubrifiant est forcé à se déplacer également dans le sens de l'épaisseur de l'aube lorsqu'il circule du pied vers la tête, ce qui augmente la surface mouillée.

Selon une alternative de réalisation montrée sur la figure 5a, la disposition relative des deux matrices de plots 80a, 80b diffère par rapport à celle de la figure 5. En effet, s'il est toujours prévu un demi-pas de décalage entre les deux matrices selon la direction transversale 60, il n'est en revanche plus prévu de décalage selon la direction de circulation du flux 52a. Par conséquent, les plots 80a, 80b des première et seconde séries de plots sont agencés de manière à définir une alternance entre des premières colonnes CP1 chacune réalisée exclusivement avec des plots 80a de la première série, et des secondes colonnes CP2 chacune réalisée exclusivement avec des plots 80b de la seconde série. En revanche, les premières et secondes lignes LP1, LP2 sont regroupées deux à deux de sorte qu'au sein d'une même ligne LP de cet ensemble de plots 80a, 80b également en forme de matrice, les plots 80a de la première série sont agencés en alternance avec les plots 80b de la seconde série.

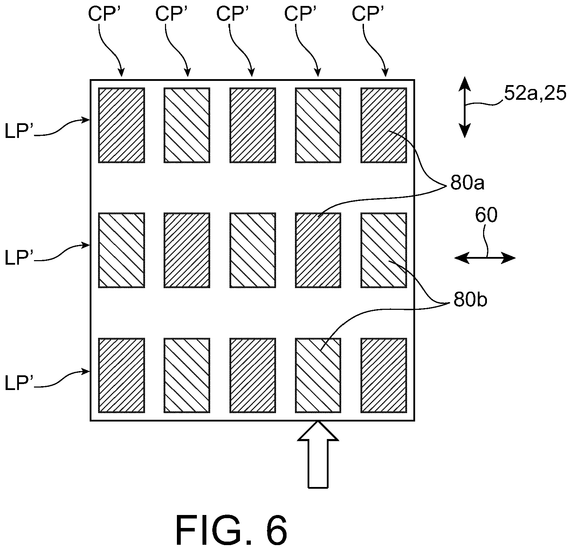

Enfin, selon un second mode de réalisation représenté sur la figure 6, les plots 80a de la première série sont réalisés en quinconce, de même que les plots 80b de la seconde série sont aussi réalisés en quinconce. Une fois le corps d'intrados assemblé sur le corps d'extrados, l'ensemble des plots 80a, 80b forme une matrice avec des colonnes de plots CP', et des lignes de plots LP'. Chaque ligne LP' est formée par l'alternance entre des plots 80a et des plots 80b, de même que chaque colonne CP' est formée par l'alternance entre des plots 80a et des plots 80b.

De retour à la figure 2, durant le fonctionnement du moteur, le lubrifiant circulant à travers le circuit 56 est introduit dans le premier passage intérieur 50a, dans la première direction 52a allant radialement vers l'extérieur. A ce stade, le lubrifiant présente une température élevée. Un échange thermique s'effectue alors entre ce lubrifiant épousant les plots 80a, 80b du premier passage 50a, et le flux secondaire épousant la surface extérieure des parois d'intrados et d'extrados. Le lubrifiant, après avoir été redirigé par le coude 54 dans le second passage 50b, subit dans ce dernier un refroidissement analogue, toujours par échange thermique avec le flux d'air secondaire et en circulant selon la seconde direction principale d'écoulement 52b. Ensuite, le lubrifiant refroidi est extrait de l'aube 24, et redirigé par le circuit fermé 56 vers des éléments à lubrifier et/ou vers un réservoir de lubrifiant à partir duquel du lubrifiant refroidi est pompé pour lubrifier des éléments.

Bien entendu, diverses modifications peuvent être apportées par l'homme du métier à l'invention qui vient d'être décrite, uniquement à titre d'exemples non limitatifs. En particulier, les caractéristiques techniques spécifiques à chacun des modes de réalisation décrits ci-dessus sont combinables entre elles, sans sortir du cadre de l'invention. Enfin, il est noté que dans le cas non illustré des aubes directrices d'entrée pour redresser le flux d'air en amont de la soufflante, ces aubes sont agencées dans tout le flux d'air de la soufflante autour d'un cône d'entrée d'air non rotatif, les pieds des aubes étant alors reliés à ce cône fixe d'entrée d'air.

## Revendications

1. Aube directrice (24) destinée à être agencée dans tout ou partie d'un flux d'air d'une soufflante (15) de turbomachine d'aéronef à double flux, l'aube directrice comprenant un pied (34), une tête (36), ainsi qu'une partie aérodynamique (32) de redressement de flux agencée entre le pied et la tête de l'aube, l'aube comprenant un corps d'extrados (32a) définissant au moins une partie d'une surface d'extrados (72) de la partie aérodynamique (32), ainsi qu'un corps d'intrados (32b) définissant au moins une partie d'une surface d'intrados (70) de la partie aérodynamique (32), celle-ci comportant au moins un passage intérieur (50a, 50b) de refroidissement de lubrifiant équipé de plots (80a, 80b) perturbateurs de flux et délimité au moins en partie par les corps d'intrados et d'extrados fixés l'un sur l'autre,
**caractérisée en ce qu'**une première série de plots (80a) est réalisée d'un seul tenant avec le corps d'extrados (32a), les plots de la première série définissant entre eux un premier espace inter-plots (84a),
**en ce qu'**une seconde série de plots (80b) est réalisée d'un seul tenant avec le corps d'intrados (32b), les plots de la seconde série définissant entre eux un second espace inter-plots (84b) pénétré par les plots (80a) de la première série tandis que le premier espace inter-plots (84a) est pénétré par les plots (80b) de la seconde série,
et **en ce que** l'extrémité des plots (80a) de la première série se situe à distance du corps d'intrados (32b), de même que l'extrémité des plots (80b) de la seconde série se situe à distance du corps d'extrados (32a).

2. Aube selon la revendication 1, **caractérisé en ce que** chacune des première et seconde séries de plots (80a, 80b) se présente sous forme de matrice définissant des lignes et des colonnes de plots (LP1, LP2, CP1, CP2).

3. Aube selon la revendication 2, **caractérisée en ce que** les plots (80a, 80b) des première et seconde séries de plots sont agencés en quinconce.

4. Aube selon la revendication 2, **caractérisée en ce que** les plots (80a, 80b) des première et seconde séries de plots sont agencés de manière à définir une alternance de colonnes (CP1) réalisées exclusivement avec des plots (80a) de la première série, et de colonnes (CP2) réalisées exclusivement avec des plots (80b) de la seconde série.

5. Aube selon la revendication 1, **caractérisée en ce qu'**au sein de chacune des première et seconde séries de plots (80a, 80b), les plots sont agencés en quinconce.

6. Aube selon la revendication 5, **caractérisée en ce que** les plots (80a, 80b) des première et seconde séries de plots sont agencées de manière à définir ensemble une matrice formant des lignes (LP') et des colonnes (CP') de plots, chacune des lignes et colonnes de la matrice étant réalisée par l'alternance de plots (80a) de la première série et de plots (80b) de la seconde série.

7. Aube selon l'une quelconque des revendications précédentes, **caractérisée en ce que** chaque plot (80a, 80b) présente une section de forme générale circulaire, oblongue, carrée ou rectangulaire.

8. Aube selon l'une quelconque des revendications précédentes, **caractérisée en ce que** chaque plot (80a, 80b) présente une section de forme générale oblongue, avec le grand axe (81) agencé parallèlement à une direction principale d'écoulement du lubrifiant (52a) dans la passage de refroidissement (50a).

9. Turbomachine (1) d'aéronef, de préférence un turboréacteur, comprenant une pluralité d'aubes directrices (24) selon l'une quelconque des revendications précédentes, agencées en aval ou en amont d'une soufflante (15) de la turbomachine.

10. Procédé de fabrication d'une aube directrice (24) selon l'une quelconque des revendications 1 à 8, **caractérisé en ce qu'**il comprend une étape de réalisation des plots (80a, 80b) par usinage des corps d'extrados et d'intrados (32a, 32b).

## Patentansprüche

1. Leitschaufel (24), die dazu vorgesehen ist, ganz oder teilweise in einem Luftstrom eines Gebläses (15) eines Zweistrom-Turbotriebwerks eines Luftfahrzeuges angeordnet zu werden, wobei die Leitschaufel einen Fuß (34), einen Kopf (36) sowie einen aerodynamischen Teil (32) zur Gleichrichtung des Stroms aufweist, der zwischen dem Fuß und dem Kopf der Schaufel angeordnet ist, wobei die Schaufel einen saugseitigen Körper (32a), der zumindest einen Teil einer saugseitigen Fläche (72) des aerodynamischen Teils (32) definiert, sowie einen druckseitigen Körper (32b) aufweist, der zumindest einen Teil einer druckseitigen Fläche (70) des aerodynamischen Teils (32) definiert, wobei dieser zumindest einen inneren Kühldurchgang (50a, 50b) für das Schmiermittel aufweist, der mit Störstufen (80a, 80b) des Flusses versehen ist und zumindest teilweise durch den druckseitigen und den saugseitigen Körper begrenzt ist, welche aneinander befestigt sind,
**dadurch gekennzeichnet, dass** eine erste Reihe von Stufen (80a) einstückig mit dem saugseitigen Körper (32a) ausgeführt ist, wobei die Stufen der ersten Reihe einen ersten Zwischenraum zwischen den Stufen (84a) definieren,
dass eine zweite Reihe von Stufen (80b) einstückig mit dem druckseitigen Körper (32b) ausgeführt ist, wobei die Stufen der zweiten Reihe einen zweiten Zwischenraum zwischen den Stufen (84b) definieren, der von den Stufen (80a) der ersten Reihe durchdrungen wird, während der erste Zwischenraum zwischen den Stufen (84a) von den Stufen (80b) der zweiten Reihe durchdrungen wird,
und dass sich das Ende der Stufen (80a) der ersten Reihe beabstandet von dem druckseitigen Körper (32b) befindet, sowie dass sich das Ende der Stufen (80b) der zweiten Reihe beabstandet von dem saugseitigen Körper (32a) befindet.

2. Schaufel nach Anspruch 1, **dadurch gekennzeichnet, dass** die erste und die zweite Reihe von Stufen (80a, 80b) jeweils in Form einer Matrix dargestellt ist, die Linien und Spalten der Stufen definiert (LP1, LP2, CP1, CP2).

3. Schaufel nach Anspruch 2, **dadurch gekennzeichnet, dass** die Stufen (80a, 80b) der ersten und der zweiten Reihe von Stufen versetzt angeordnet sind.

4. Schaufel nach Anspruch 2, **dadurch gekennzeichnet, dass** die Stufen (80a, 80b) der ersten und der zweiten Stufenreihe derart angeordnet sind, dass sie einen Wechsel von Spalten (CP1), die ausschließlich mit Stufen (80a) der ersten Reihe realisiert sind, und von Spalten (CP2) definieren, die ausschließlich mit Stufen (80b) der zweiten Reihe realisiert sind.

5. Schaufel nach Anspruch 1, **dadurch gekennzeichnet, dass** innerhalb jeder der ersten und der zweiten Reihe von Stufen (80a, 80b) die Stufen versetzt angeordnet sind.

6. Schaufel nach Anspruch 5, **dadurch gekennzeichnet, dass** die Stufen (80a, 80b) der ersten und der zweiten Stufenreihe derart angeordnet sind, dass sie zusammen eine Matrix definieren, welche Linien (LP') und Spalten (CP') von Stufen bildet, wobei jede der Linien und Spalten der Matrix durch den Wechsel der Stufen (80a) der ersten Reihe und der Stufen (80b) der zweiten Reihe realisiert wird.

7. Schaufel nach einem der vorhergehenden Ansprüche, **dadurch gekennzeichnet, dass** jede Stufe (80a, 80b) einen allgemein kreisförmigen, länglichen, quadratischen oder rechteckigen Querschnitt aufweist.

8. Schaufel nach einem der vorhergehenden Ansprüche, **dadurch gekennzeichnet, dass** jede Stufe (80a, 80b) einen allgemein länglichen Querschnitt aufweist, wobei die Hauptachse (81) parallel zu einer Hauptfließrichtung des Schmiermittels (52a) in dem Kühldurchgang (50a) angeordnet ist.

9. Turbotriebwerk (1) eines Luftfahrzeugs, vorzugsweise ein Turboluftstrahltriebwerk, mit einer Mehrzahl von Leitschaufeln (24) nach einem der vorhergehenden Ansprüche, die einem Gebläse (15) des Turbotriebwerks nachgelagert oder vorgelagert sind.

10. Herstellungsverfahren einer Leitschaufel (24) nach einem der Ansprüche 1 bis 8, **dadurch gekennzeichnet, dass** es einen Schritt zur Bereitstellung der Stufen (80a, 80b) durch Bearbeitung der saugseitigen und der druckseitigen Körper (32a, 32b) umfasst.

## Claims

1. Guide vane (24) that will be arranged in all or part of an air flow stream of a fan (15) of a twin spool aircraft turbine engine, the guide vane comprising a root (34), a tip (36) and an aerodynamic part (32) straightening the flow stream arranged between the vane root and tip, the vane comprising an extrados body (32a) defining at least part of an extrados surface (72) of the aerodynamic part (32), and an intrados body (32b) defining at least part of an intrados surface (70) of the aerodynamic part (32), this comprising at least one internal lubricant cooling passage (50a, 50b) equipped with flow disturbing studs (80a, 80b) and delimited at least partly by the intrados and extrados body fixed to each other,
**characterised in that** a first series of studs (80a) is made in a single piece with the extrados body (32a), the studs of the first series defining a first inter-stud space (84a) between them,
**in that** a second series of studs (80b) is made in a single piece with the intrados body (32b), the studs of the second series defining a second inter-stud space (84b) between them through which studs (80a) of the first series pass while the studs (80b) of the second series pass through the first inter-stud space (84a),
and **in that** the end of the studs (80a) of the first series is located at a distance from the intrados body (32b), and the end of the studs (80b) of the second series is located at a distance from the extrados body (32a).

2. Vane according to claim 1, **characterised in that** each of the first and second series of studs (80a, 80b) is in the form of a matrix defining rows and columns of the studs (LP1, LP2, CP1, CP2).

3. Vane according to claim 2, **characterised in that** the studs (80a, 80b) of the first and second series of studs are staggered.

4. Vane according to claim 2, **characterised in that** the studs (80a, 80b) of the first and second series of studs are arranged so as to define an alternation of columns (CP1) made exclusively with studs (80a) of the first series, and columns (CP2) made exclusively with studs 80b of the second series.

5. Vane according to claim 1, **characterised in that** the studs in each of the first and second series of studs (80a, 80b) are staggered.

6. Vane according to claim 5, **characterised in that** the studs (80a, 80b) of the first and second series of studs are arranged so as to jointly define a matrix forming rows (LP') and columns (CP') of studs, each of the rows and columns in the matrix then being made by the alternation of studs (80a) in the first series and studs (80b) in the second series.

7. Vane according to claim 1, **characterised in that** each stud (80a, 80b) has a generally circular, oblong, square or rectangular cross-section.

8. Vane according to claim 1, **characterised in that** each stud (80a, 80b) has an oblong general shape, with the long axis (81) arranged to be parallel to a principal flow direction of lubricant (52a) in the cooling passage (50a).

9. Turbomachine (1) for an aircraft, preferably a turbojet, comprising a plurality of guide vanes (24) according to claim 1, located downstream or upstream from a fan (15) of the turbomachine.

10. Method of fabricating a guide vane (24) according to claim 1, **characterised in that** it comprises a step in which studs (80a, 80b) are made by machining the extrados and intrados bodies (32a, 32b).
